# Europäisches Patentamt
# European Patent Office
# Office européen des brevets

(19)

(11) Veröffentlichungsnummer: **0 042 885**
**B1**

(12)

# EUROPÄISCHE PATENTSCHRIFT

(45) Veröffentlichungstag der Patentschrift:
21.11.84

(51) Int. Cl.³: **F 16 L 25/00**, F 16 L 5/02

(21) Anmeldenummer: **80104001.5**

(22) Anmeldetag: **11.07.80**

(54) **Gas-Hausanschlussvorrichtung.**

(30) Priorität: **26.06.80 DE 3023921**

(43) Veröffentlichungstag der Anmeldung:
**06.01.82 Patentblatt 82/1**

(45) Bekanntmachung des Hinweises auf die Patenterteilung:
**21.11.84 Patentblatt 84/47**

(84) Benannte Vertragsstaaten:
**BE CH FR GB LI NL SE**

(56) Entgegenhaltungen:
**AT - B - 339 102**
**DE - A - 1 801 908**

(73) Patentinhaber: **Jeschke, Immanuel, St. Nicolai-Strasse 3, D-3203 Sarstedt OT Heisede (DE)**

(72) Erfinder: **Jeschke, Immanuel, St. Nicolai-Strasse 3, D-3203 Sarstedt OT Heisede (DE)**

(74) Vertreter: **Junius, Walther, Dr., Wolfstrasse 24, D-3000 Hannover 81 (DE)**

# Beschreibung

Die Erfindung betrifft eine Gas-Hausanschlußvorrichtung, mit der ein im Erdreich verlegtes Kunststoffrohr mit einem im Hause verlegten Eisenrohr zu verbinden ist, bestehend aus einer Verschraubung, in der ein Dichtring in einer Hülse gequetscht ist und dadurch zur Anlage am Kunststoffrohr und an der Innenwand der Hülse gebracht ist.

Gas-Hausanschlußvorrichtungen sind in verschiedener Art bekanntgeworden. Sie sollen eine dauerhafte gasdichte Verbindung zwischen dem im Erdreich verlegten Kunststoffrohr und dem im Hause verlegten Eisenrohr herstellen. Meist werden sie an einer Stelle des Hauses angebracht, die feucht ist. Feuchtigkeit fördert die Korrosion. Daher ist diese Gas-Hausanschlußvorrichtung so auszuführen, daß sie korrosionsunempfindlich ist. Ist diese Anschlußstelle innerhalb eines Raumes eines Hauses, z. B. im Keller, angeordnet, so müssen auch Vorkehrungen für einen Feuerschutz getroffen werden. Diese Anforderungen führten zu Gas-Hausanschlußvorrichtungen, die schwierig herzustellen, schwierig zu montieren und recht aufwendig sind. Dabei ist aber gerade die einfache und problemlose Montage an dieser Stelle von besonderer Wichtigkeit, damit nicht Montagefehler zu einem Undichtwerden des Gas-Hausanschlusses führen.

So ist durch die AT-B-339 102 für die Verbindung eines Kunststoffrohres mit einem Eisenrohr eine aus Kunststoff gefertigte Muffe bekannt geworden, in die mittig eine Mutter eingegossen ist. In den Innenraum dieser Muffe ist zur einen Seite der Mutter ein Widerstandsdraht eingelegt und zur anderen Seite der Mutter sind ringförmige Ausnehmungen für die Aufnahme von Dichtringen eingeformt. Das Kunststoffrohr wird in die Seite der Muffe eingeführt, in der der Widerstandsdraht eingelegt ist. Nach der Einführung des Kunststoffrohres wird an den Widerstandsdraht ein elektrischer Strom gelegt, der den Widerstandsdraht aufheizt und dadurch eine Verschweißung des in die Muffe eingesteckten Kunststoffrohres mit der Muffe bewirken soll. Solch eine Schweißung ist aber auf der Baustelle nur mit erheblichen Schwierigkeiten durchführbar. Da das Kunststoffrohr auf der Baustelle manchmal nicht exakt sauber ist, gelingt diese Schweißung nicht immer. Die Folge ist eine Undichtigkeit, die gerade bei Gasanschlüssen sicher vermieden werden sollte. In die andere Seite der Muffe wird das am Ende mit einem Gewinde versehene Eisenrohr eingeführt und dann mit dem Gewinde in die in die Muffe eingegossene Mutter eingeschraubt. Da nun das Stahlrohr einer Gas-Hausanschlußvorrichtung oftmals abgebogen ist und am Ende eine Gas-Absperrvorrichtung sowie einen Flansch trägt, sind die Möglichkeiten des Einbaues solcher Gas-Hausanschlußvorrichtungen beschränkt: Denn für das Drehen beim Einschrauben in die in der Muffe eingegossene Mutter muß immer ausreichend Platz für das abgebogene Ende und die daran befestigte Absperrarmatur vorhanden sein. Das aber ist immer dort nicht der Fall, wo das Stahlrohr dicht über dem Kellerboden einzubauen ist.

Eine andere Gas-Hausanschlußvorrichtung ist durch die DE-A-1 801 908 bekanntgeworden. Bei dieser ist auf das Ende des Kunststoffrohres eine Kunststoffbuchse aufzukleben, die mit einem Außengewinde versehen ist. Auf dieses Außengewinde wird eine Metallhülse geschraubt, die ihrerseits auf dem Metallrohr befindlich ist. Der Abdichtung dient ein O-Ring. Zusätzlich ist eine Schutzhülse vorgesehen, die in das Mauerwerk eingemauert werden kann. Die Abdichtung zwischen der Metallhülse und dem Schutzrohr erfolgt durch eine Dichtungspackung, die durch eine Mutter gepreßt wird. Die auf einem auf der Außenseite der Metallhülse befindlichen Gewinde aufgeschraubt ist. Auch hier ist an der Baustelle eine Verbindung zwischen dem Ende des Kunststoffrohres und einer auf das Kunststoffrohr aufzuklebenden Kunststoffbuchse herzustellen. Die Herstellung dieser Verbindung erfordert nicht nur sehr saubere handwerkliche Arbeit beim Verkleben, wie sie unter Baustellenbedingungen kaum erreichbar ist, sondern erfordert darüber hinaus noch einen erheblichen Aufwand an Montagezeit, weil nach dem Aufkleben der Kunststoffbuchse auf das Ende des Kunststoffrohres erst gewartet werden muß, bis die Klebverbindung fest geworden ist. Ist die Klebverbindung nicht einwandfrei gelungen, was auf der Baustelle gar nicht so einfach feststellbar ist, so tritt Gas aus, was wegen der bekannten Gefahren des Gasaustritts unbedingt zu vermeiden ist.

Es ist die Aufgabe der Erfindung, einen sehr einfach aufgebauten Gas-Hausanschluß zu schaffen, der leicht und problemlos zu montieren ist und der sich durch hohe Sicherheit auszeichnet.

Die erfindungsgemäße Gas-Hausanschlußvorrichtung ist dadurch gekennzeichnet, daß die Hülse einen weiteren Dichtring aufnimmt, der mit Abstand von dem anderen Dichtring angeordnet ist und zwischen der Hülse und dem Eisenrohr angeordnet ist, daß das Eisenrohr einen Anschlag trägt, mit dem mindestens ein Einzelteil der Verschraubung zusammenwirkt, und daß im Kunststoffrohr eine metallische Hülse am Ort des Dichtringes angeordnet ist, die einen Bund oder eine am Ort des Dichtringes angeordnete ringförmige Ausnehmung, ringförmige Rillen oder ringförmige Erhebungen aufweist.

Dieses ist eine sehr einfache Konstruktion, die nicht nur einfach herstellbar, sondern auch einfach und problemlos zu montieren ist. Dabei zeichnet sich diese Konstruktion durch sehr hohe Sicherheit aus. Sie bildet eine robuste Rohrkapsel.

Vorteilhaft für diese Gas-Hausanschlußvorrichtung ist es, wenn die Hülse im Inneren zwischen dem dem Eisenrohr zugeordneten Dichtring und der Schraubhülse mit Außengewinde einen weiteren Distanzring aufweist und daß vorzugsweise die Hülse in einem Isolierstoffrohrstück untergebracht ist, weil dadurch einerseits der Dichtungsring günstiger zu liegen kommt, nämlich tiefer in der Hauswand, andererseits der Dichtungsring gegen Beschädigung beim Hineinschrauben der Hülse geschützt ist.

Anschlag durch eine in der Kunststoffummantelung des Eisenrohres eingearbeitete Rille gebildet sein. In dieser Rille setzt sich der dem Eisenrohr zugeordnete Dichtring fest und bildet dann zusammen mit der Rille den Anschlag, der für die Verschraubung einen Festpunkt bildet, gegenüber dem sich die beim Schrauben verschiebenden Teile der Verschraubung bewegen. Hier ist durch diesen Festpunkt gesichert, daß bei der Montage sich nicht Teile so gegeneinander verschieben können, daß die Dichtringe an Orten liegen, wo sie eine Abdichtung nicht mehr gewährleisten.

Andere Möglichkeiten der Ausführung dieses Anschlages bestehen darin, daß der Anschlag durch einen am Ende des Eisenrohres angebrachten Ring oder Flansch gebildet ist oder daß der Anschlag durch einen Bundring oder Flansch eines in das Ende des Eisenrohres eingeschraubten Nippels gebildet ist. Alle diese Ausführungen des Anschlages gewährleisten den richtigen Sitz der Dichtringe an den hierfür vorgesehenen Stellen und vermeiden sicher eine Fehlmontage.

Die metallische Hülse, die das Kunststoffrohr von innen her abstützt, kann von dem von der Kunststoffummantelung freigelegten Ende des Eisenrohres gebildet sein, aber auch von einem in das Ende des Eisenrohres eingeschraubten Nippel oder einfach von einer metallischen, in das Ende des Kunststoffrohres eingesteckten Hülse gebildet sein, die einen Flansch am Ende als Anschlag trägt.

Eine besonders einfach herzustellende und einfach sowie sicher zu montierende Ausführung besteht darin, daß die Hülse an einem Ende ein Innengewinde aufweist, in das eine Hülse mit Außengewinde eingeschraubt ist, daß die Hülse am anderen Ende als Anschlag oder Lager für den Dichtring ausgebildet ist und daß zwischen den Dichtringen ein Distanzring angeordnet ist.

Diese Ausführungsform läßt sich insbesondere für eine Anordnung der Verbindungsstelle von Kunststoffrohr und Eisenrohr im Inneren einer Hauswand herrichten: Dieses erfolgt dadurch, daß die Hülse auf dem mit Innengewinde versehenen Ende eine Feuerschutzkappe trägt und daß die Feuerschutzkappe vorzugsweise einen Isolierring trägt und Löcher für das Durchstecken von Schrauben aufweist. Diese Unterbringung in der Hauswand ist von besonderem Vorteil für den Feuerschutz: In der aus unbrennbarem Material ausgeführten Hauswand ist die kritische Verbindungsstelle zwischen dem Kunststoffrohr und dem Eisenrohr an einer Stelle angebracht, wo sie nicht von Flammen erreicht werden kann und wo durch die Wärmekapazität der Hauswand gewährleistet ist, daß diese Verbindungsstelle auch bei Ausbruch von Feuer kühl liegt.

Dabei ist hier die Verbindungsstelle immer für Prüfungen und ein eventuelles Nachziehen der Verschraubung gut erreichbar. Die Montage kann in sehr einfacher Weise vor der Hauswand erfolgen, nach der Montage wird die Hülse mitsamt dem Kunststoffgasrohr und dem Eisenrohr in das eingemauerte Isolierstoffrohrstück eingeschoben und dann wird die an der Hülse festmontierte Feuerschutzkappe an der Hauswand angeschraubt. Ein oder mehrere Dichtringe, die in dem Zwischenraum zwischen dem eingemauerten Isolierstoffrohrstück und dem Kunststoffgasrohr angeordnet sind, verhindern ein Eindringen von Bodenflüssigkeit in das Isolierstoffrohrstück, so daß die Hülse und die Feuerschutzkappe nicht von agressiver Bodenflüssigkeit erreicht werden kann. Deshalb kann hier die Hülse aus Metall hergestellt werden, die Feuerschutzkappe kann an die Hülse angelötet oder angeschweißt sein. Die Feuerschutzkappe kann aber auch auf ein Außengewinde der Hülse aufgeschraubt sein, sie kann auch mit Hilfe von mindestens einer Mutter auf einem Außengewinde der Hülse befestigt sein. Dieses ist dann von Vorteil, wenn aus Feuerschutzgründen ein wärmeisolierender Isolierring zwischen der Hülse und der Feuerschutzkappe angeordnet ist. Die Hülse kann bei diesen Ausführungsformen ebenso gut aus Kunststoff hergestellt sein.

Die Gas-Hausanschlußvorrichtung der vorliegenden Erfindung kann aber auch im Außenbereich des Hauses vor der Hauswand im Erdreich angeordnet werden. In diesem Falle ist es zweckmäßig, wenn die Verschraubung aus einer mit mindestens einer Überwurfmutter besteht. In diesem Falle wird man die Teile der Verschraubung zweckmäßigerweise aus einem nicht korrodierenden Metall oder aus Kunststoff herstellen.

Eine besonders vorteilhafte Ausführungsform dieser Gas-Hausanschlußvorrichtung besteht darin, daß im Eisenrohr am Ort des Dichtringes eine ringförmige Ausnehmung, ringförmige Rillen oder ringförmige Erhebungen angeordnet sind. Hierbei ist es zweckmäßig, wenn die Dichtringe Abschnitte eines Schlauches sind, also rechteckigen oder trapezförmigen Querschnitt aufweisen. Hierbei ist es zweckmäßig, wenn im Querschnitt des Dichtringes die parallel zur Achse verlaufende Seite länger als die senkrecht zur Achse verlaufende Seite ist. Jeder Dichtring weist somit eine langgestreckte Form, nicht die Form eines O-Ringes, auf. Es hat sich hierbei als besonders vorteilhaft erwiesen, daß der dem Eisenrohr zugeordnete Dichtring einen Durchmesser aufweist, der dem Außendurchmesser des Eisenrohres im Bereich der Rille entspricht, während der Innendurchmesser des dem Kunststoffrohr zugeordneten Dichtringes dem Außendurchmesser des Kunststoffrohres entspricht, während die Außendurchmesser der beiden Dichtringe dem Innendurchmesser der Hülse der Verschraubung entsprechen. Dieses ist eine besonders sichere, leicht herzustellende und vorteilhafte Konstruktion der vorliegenden Erfindung.

In sehr einfacher Weise läßt sich der Anschlag am Ende des Eisenrohres auch dadurch ausbilden, daß das Eisenrohr vor seinem Ende einen ringförmigen Einstich (ringförmige Nut) aufweist, in den ein Federring (Seegerring) eingesetzt ist. Gegen diesen Federring legt sich auf der einen Seite die Stirnseite der Federhülse, auf der anderen Seite ist gegen diesen Federring eine Ringscheibe und gegen diese der Dichtring gelegt.

Als besonders vorteilhaft hat sich eine Ausführungsform erwiesen, die sich dadurch auszeichnet, daß die Schraubhülse auf dem Eisenrohr durch einen am Ende des Eisenrohres in einen ringförmigen Einstich eingesetzten Federring einerseits und einen auf dem Eisenrohr befindlichen Bund oder Absatz andererseits axial unverschiebbar aber drehbar festgelegt ist. Durch diese axial unverschiebbare Festlegung der Schraubhülse auf dem Eisenrohr wird erreicht, daß die Stoßstelle zwischen dem Eisenrohr und dem Kunststoffgasrohr genau innerhalb der Hülse am günstigsten Ort festgelegt ist.

Als vorteilhaft hat es sich weiterhin erwiesen, daß der dem Eisenrohr zugeordnete Dichtring schmaler und aus etwas härterem Gummi als der dem Kunststoffgasrohr zugeordnete Dichtring ist. Hierdurch wird erreicht, daß beim Anziehen der Schraubhülse durch deren Einschrauben zuerst der weichere Gummiring gegen das Kunststoffgasrohr gepreßt wird und anschließend der aus etwas härterem Gummi gefertigte, dem Eisenrohr zugeordnete Dichtring in seine Dichtstellung gebracht wird.

Das Wesen der vorliegenden Erfindung ist nachstehend anhand von in der Zeichnung schematisch dargestellten Ausführungsbeispielen näher erläutert. Es zeigt

Fig. 1 eine in der Hauswand unterzubringende Vorrichtung, bei der der Anschlag durch eine in die Kunststoffummantelung des Eisenrohres eingearbeitete Rille gebildet ist,

Fig. 2 eine Vorrichtung, bei der der Anschlag durch einen Bundring auf einem in das Ende des Eisenrohres eingeschraubten Nippel gebildet ist,

Fig. 3 eine Ausführungsform, bei der der Anschlag durch einen am Ende des Eisenrohres angebrachten Flansch gebildet ist,

Fig. 4 eine Ausführungsform, bei der der Anschlag durch einen Flansch an einem Nippel gebildet ist, der in das Ende des Eisenrohres eingeschraubt ist,

Fig. 5 eine Ausführungsform mit schlauchförmigen Dichtungsringen,

Fig. 6 eine Ausführungsform mit axial unverschiebbar, aber drehbar auf dem Eisenrohr angeordneter Schraubhülse.

Das Kunststoffrohr 1 leitet Gas durch das Erdreich aus dem Gesamtnetz und führt es einem im Inneren des Hauses verlegten Eisenrohr 2 zu, welches eine Kunststoffummantelung 3 trägt. In den gezeichneten Ausführungsbeispielen ist die Verbindungsstelle zwischen dem Kunststoffgasrohr 1 und dem Eisenrohr 2 im Inneren der Hauswand 4 angeordnet. In diese Hauswand 4 ist ein Isolierstoffrohrstück 5 eingemauert. Eine Dichtung zwischen dem Isolierstoffrohrstück 5 und dem Kunststoffgasrohr 1 ist durch einen eingelegten Dichtring 6 gewährleistet.

Die die Verbindung zwischen dem Kunststoffgasrohr 1 und dem Eisengasrohr 2 herstellende Verschraubung besteht aus einer Hülse 7, in der zwei Dichtringe 8, 9 eingelegt sind, von denen der Dichtring 8 dem Kunststoffrohr 1 zugeordnet ist, während der Dichtring 9 dem Eisenrohr 2 zugeordnet ist. Zwischen den beiden Dichtringen 8, 9 liegt ein Distanzring 10, der die beiden Dichtringe 8, 9 auf dem erforderlichen Abstand hält. Diese beiden Dichtringe 8, 9 werden durch eine Schraube oder eine Mutter, in den gezeichneten Ausführungsbeispielen durch die mit Außengewinde versehene Schraubhülse 11, gequetscht, so daß sie sich fest dichtend außen an die Hülse und innen an das Kunststoffrohr bzw. das Eisenrohr bzw. die Ummantelung 3 des Eisenrohres 2 anlegen.

In den gezeichneten Ausführungsbeispielen ist noch ein weiterer Distanzring zwischen der Schraubhülse 11 und dem Dichtring 9 angeordnet. Dieser weitere Distanzring 12 ermöglicht es, die Schraubhülse 11 kurz auszuführen und trotzdem die Verbindungsstelle zwischen dem Kunststoffgasrohr 1 und dem Eisenrohr 2 tief im Inneren der Wand 4 anzuordnen.

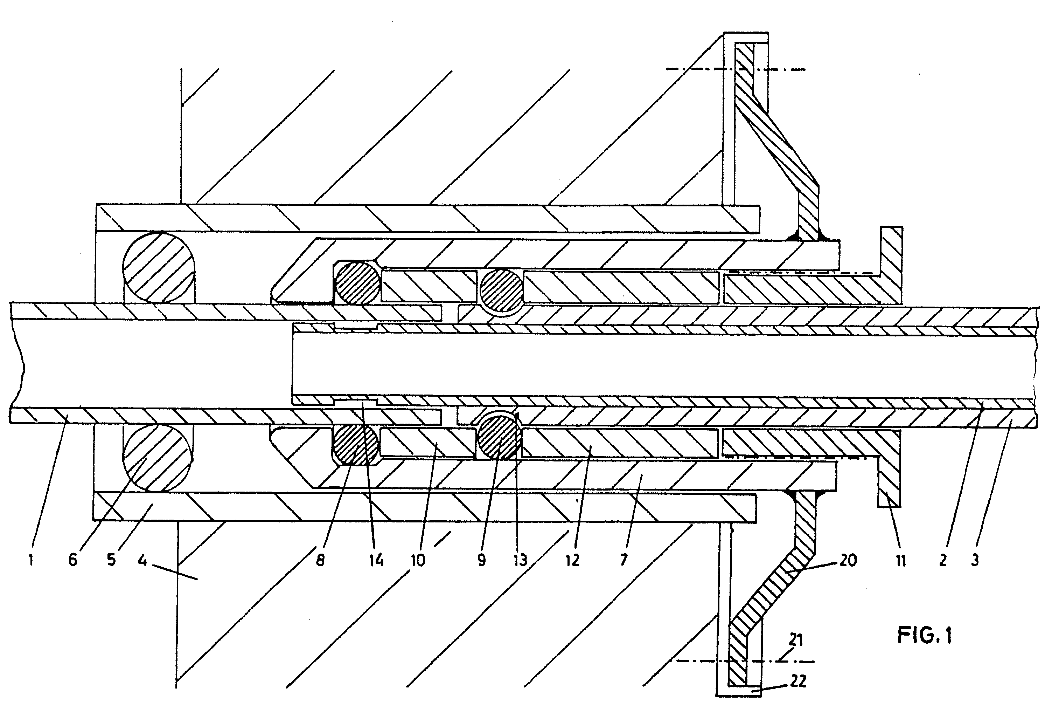

Im Ausführungsbeispiel der Fig. 1 ist der den festen Sitz der Verschraubung exakt sichernde Anschlag durch eine Rille 13 der Kunststoffummantelung 3 des Eisenrohres 2 gebildet. In diese Rille 13 rutscht der Ring 9 hinein und zentriert durch seinen Sitz in der Rille 13 die einzelnen Teile der Verschraubung, die beim Einschrauben der Schraubhülse 11 sicherstellen, daß alle Teile der Verschraubung so sitzen, daß ein ungewolltes Lösen der Teile voneinander nicht möglich ist. Hierdurch ist gewährleistet, daß der Dichtring 8 an einem Ort liegt, so in dem Eisenrohr 2, das in diesem Ausführungsbeispiel die metallische Hülse für das Abstützen des Kunststoffgasrohres 1 in dessen Inneren bildet, die Rille 14 angeordnet ist, in die das Kunststoffgasrohr 1 an dieser Stelle unter Verengung hineingepreßt wird.

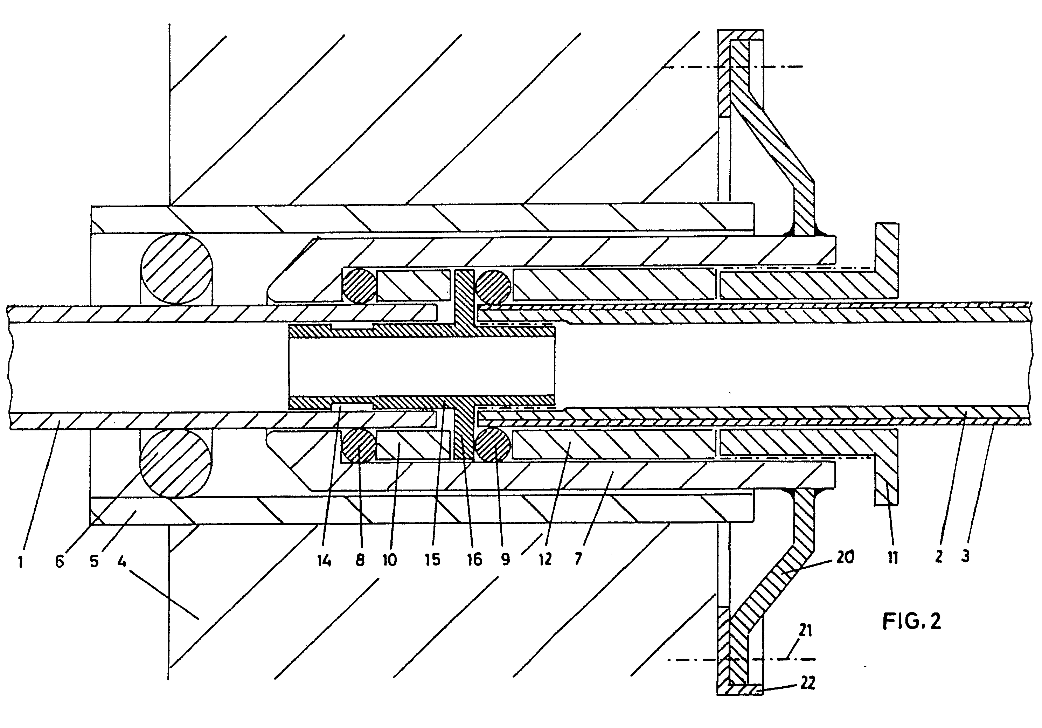

In dem Ausführungsbeispiel der Fig. 2 ist diese Rille 14 in einem Nippel 15 untergebracht, der einen Bundring 16 trägt, welcher als Anschlag für den Dichtring 9 dient und der in ein Innengewinde am Ende des Eisenrohres 2 eingeschraubt ist.

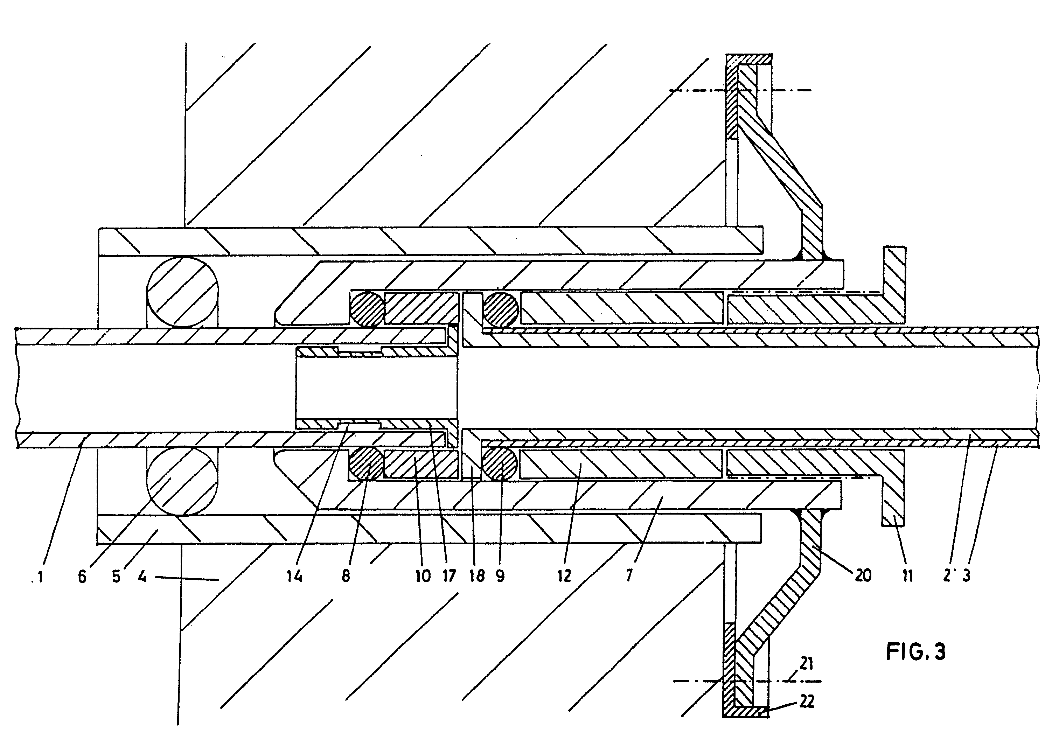

Im Ausführungsbeispiel der Fig. 3 ist die Rille 14 in einer Hülse 17 eingebracht, welche am Ende einen Flansch aufweist und welches in das Ende des Kunststoffgasrohres 1 eingeschoben ist. In diesem Ausführungsbeispiel der Fig. 3 dient als Anschlag ein Flansch 18, der am Ende des Eisenrohres 2 angebracht ist.

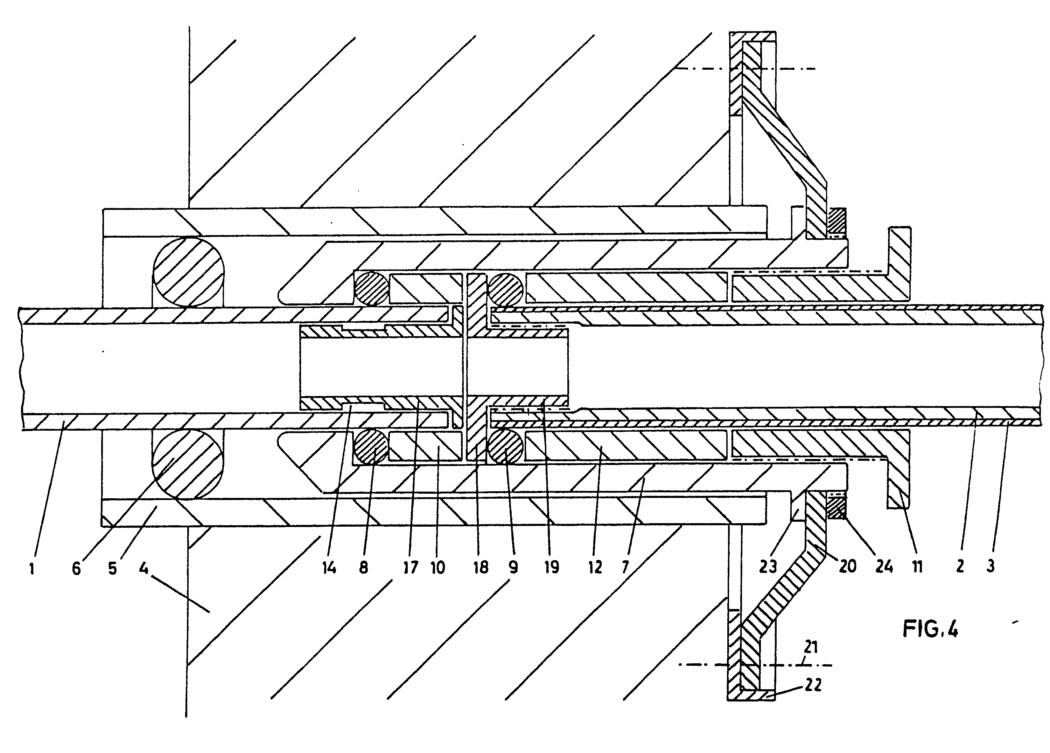

Im Ausführungsbeispiel der Fig. 4 ist dieser Flansch 18 auf einem Nippel 19 angebracht, der in das Innengewinde am Ende des Eisenrohres 2 eingeschraubt ist.

Die Hülse 7 der Verschraubung ist in dem in der Wand 4 eingemauerten Isolierstoffrohrstück 5 in den gezeichneten Ausführungsbeispielen dadurch befestigt bzw. gesichert, daß auf der Hülse 7 eine Feuerschutzscheibe 20 angebracht ist. Diese ist im Querschnitt gekröpft ausgeführt. Sie ist mittels nicht dargestellter Schrauben an den Stellen 21 an der Hauswand befestigt. Der Rand der Feuerschutzscheibe 20 trägt einen Isolierring 22, der zweckmäßigerweise am Rande einen Kragen aufweist, mit dem er den Umfang der Feuerschutzscheibe 20 überfaßt, wodurch er auf dieser gehalten wird. Dieser Isolierstoffring dient einer elektrischen Isolierung der Feuerschutzscheibe 20 von der Wand, so daß Korrosion hervorrufende Ströme nicht auf die Feuerschutzscheibe 20 gelangen können. Im Ausführungsbeispiel der Fig. 1 ist die Feuerschutzscheibe 20 auf die Hülse 7 aufgeschweißt. Im Ausführungsbeispiel der Fig. 4 trägt die Hülse 7 einen Anschlagring 23 sowie ein Außengewinde, auf welches die Mutter 24 geschraubt ist, die die Feuerschutzscheibe 20 gegen den Anschlag 23 drückt und dadurch einen festen Sitz der Feuerschutzscheibe 20 auf der Hülse 7 gewährleistet.

Es sind auch weitere Befestigungsmöglichkeiten der Feuerschutzscheibe 20 gegeben: Diese kann auf die Schraubhülse 11 aufgesetzt sein, auf die dann noch eine zusätzliche Mutter geschraubt ist. Nach dem Festziehen der Schraubhülse 11, durch das das Quetschen der Dichtringe 8 und 9 erfolgt, wird dann mittels der Mutter die Feuerschutzscheibe gegen die Stirnseite der Hülse 7 geschraubt, wodurch nicht nur die Feuerschutzscheibe 20 befestigt wird, sondern gleichzeitig auch noch die Stellung der Schraubhülse 11 gesichert wird. Da die Feuerschutzscheibe 20 relativ großflächig ist, kann bei den letztgenannten Befestigungsarten für die Feuerschutzscheibe auch ein wärmeisolierender Ring zwischen der Hülse 7 und der Feuerschutzscheibe 20 angebracht sein, der eine Wärmeübertragung von der Feuerschutzscheibe 20 auf die Hülse 7 verhindert.

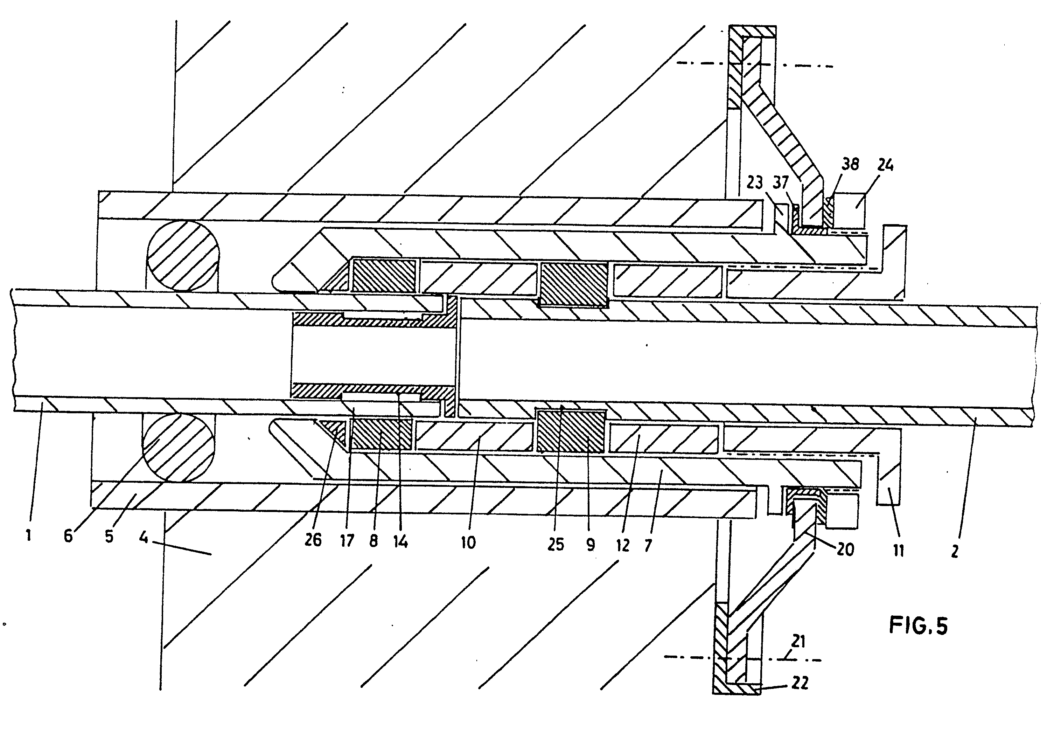

Im Ausführungsbeispiel der Fig. 5 sind die beiden Dichtringe 8, 9 schlauchförmiger Gestalt. Sie sind auch als Abschnitte eines Schaluches hergestellt. Die beiden Dichtringe weisen gleichen Außendurchmesser auf, der dem Außendurchmesser der Hülse 7 entspricht. Sie weisen jedoch unterschiedliche Innendurchmesser auf. Der Innendurchmesser des Dichtringes 8 entspricht dem Außendurchmesser des Kunststoffschlauches 1, der Innendurchmesser des Dichtringes 9 entspricht dem Außendurchmesser der in das Eisenrohr 2 eingearbeiteten Rille 25. Durch diese Bemessung ist sichergestellt, daß der Dichtring 9 schon vor dem Einbau der Vorrichtung als Transportsicherung dient. Denn wenn die Verschraubung an das Eisenrohr 2 angebracht ist, verhindert dieser Dichtring 9, daß die Verschraubung während des Transportes vom Eisenrohr abfallen kann, obwohl die dem Spannen dienende Schraubhülse 11 noch nicht fest in die Hülse 7 der Verschraubung eingeschraubt ist.

Es besteht die Möglichkeit, auch einen geschlitzten, im Querschnitt keil- oder dreieckförmigen Ring 26 in der Verschraubung anzuordnen, es können zusätzlich und dem Dichtring 9 zugeordnet, auch Keilringpaare in der Verschraubung angeordnet sein.

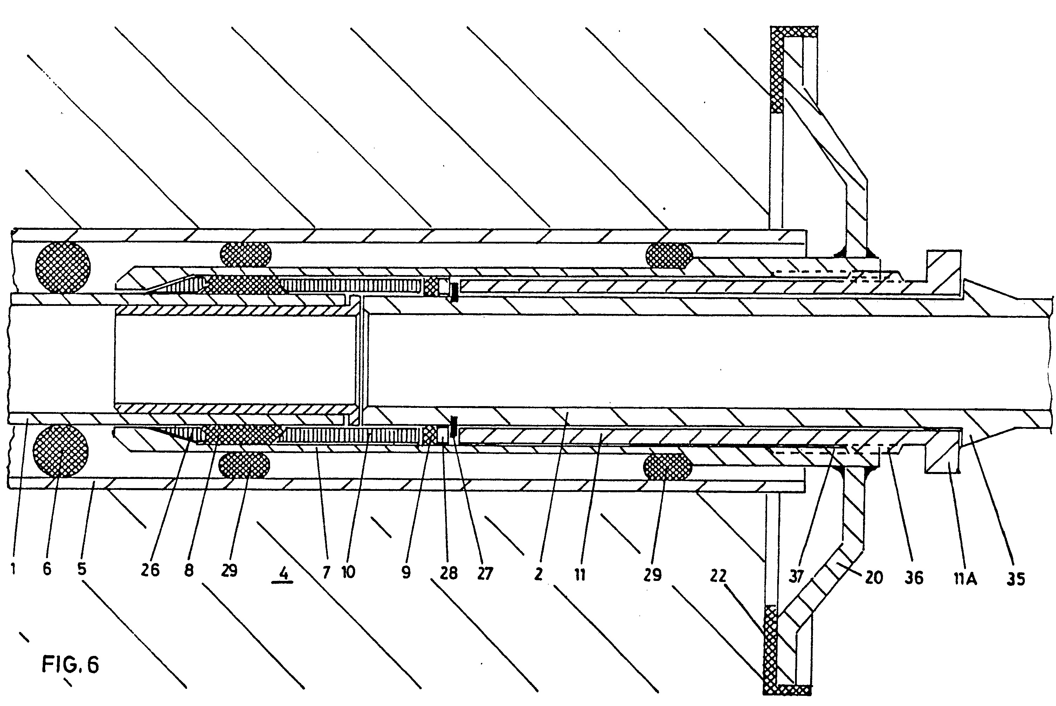

Im Ausführungsbeispiel der Fig. 6 ist die Schraubhülse 11 mit ihrem sechskantigen Flansch 11A axial auf dem Eisenrohr 2 dadurch festgelegt, daß kurz vor dem Ende des Eisenrohres 2 in diesem ein ringförmiger Einstich befindlich ist, in den der Sicherungsring (Seegerring) eingesetzt ist und in dem neben dem Sechskantflansch 11A ein im Ausführungsbeispiel keilförmiger Bund 35 am Eisenrohr 2 angearbeitet ist. Der dem Sechskantflansch 11A zugewandte Absatz dieses Bundes 35 verhindert eine Axialverschiebung der Schraubhülse 11. Dabei ist die Schraubhülse 11 völlig frei drehbar. An dem Federring 27 liegt auf der einen Seite die Stirnseite der Schraubhülse 11 an, auf der anderen Seite liegt ein Ring 28 an, an dessen anderer Stirnseite hinwiederum die Dichtung 9 anliegt. Diese Dichtung 9 ist eine Zylinderringdichtung, die schmaler als die Zylinderringdichtung 8 ist und aus etwas härterem Gummi als die Zylinderringdichtung 8 hergestellt ist. Es kann hier aber auch ein üblicher O-Ring verwendet werden. Das Außengewinde 36 auf der Schraubhülse 11 ist in das Innengewinde 37 der Hülse 7 eingeschraubt.

In der Ausführungsform der Fig. 6 ist die Hülse 7 an demjenigen Ende, an dem sich das Innengewinde 37 und die Feuerschutzscheibe 20 befindet, in ihrem Querschnitt stärker als im mittleren Teil. Dadurch ergibt sich außen ein Absatz, gegen den sich der eine Dicht- und Zentrierring 29 anlegt. Auf dem gegenüberliegenden Ende ist der Querschnitt der Hülse 7 am Ende wieder stärker als im mittleren Bereich, wobei jedoch der Außendurchmesser hier unverändert bleibt.

Eine andere Art der Befestigung der Feuerschutzscheibe 20 ist in Fig. 5 gezeigt. Hier ist ein aus Isolierstoff hergestellter, im Querschnitt winkelförmig ausgebildeter Ring 37 vorgesehen, der sich gegen einen Bund 23 auf der Hülse 7 anlegt und auf den die Feuerschutzscheibe 20 gesetzt wird. Die Feuerschutzscheibe 20 wird dann mittels einer Mutter 24 unter Zwischenlegung einer weiteren ringförmigen Isolierstoffscheibe 38 befestigt. Hierdurch ist die Feuerschutzscheibe 20 isoliert an der Hülse 7 angebracht, so daß der Isolierring 22 entfallen kann. Bei dieser Ausführungsform kann durch Feuer entstehende Wärme an der Scheibe 20 nicht in die Hülse eindringen.

Die Befestigung der Feuerschutzscheibe 20 mittels Schweißen, wie es in Fig. 6 dargestellt ist, hat jedoch dann, wenn die Feuerschutzscheibe 20 auf ihrer Außenseite mit einer unbrennbaren thermischen Isolierung versehen wird, den Vorteil, daß durch das Rohr 2 geleitete Wärme in die Hülse 7 übertritt und von dort auf die Feuerschutzscheibe 20 weitergeleitet wird.

**Patentansprüche**

1. Gas-Hausanschlußvorrichtung, mit der ein im Erdreich verlegtes Kunststoffrohr (1) mit einem im Hause verlegten Eisenrohr (2) zu verbinden ist, bestehend aus einer Verschraubung, in der ein Dichtring (8) in einer Hülse (7) gequetscht ist und dadurch zur Anlage am Kunststoffrohr (1) und an der Innenwand der Hülse (7) gebracht ist, dadurch gekennzeichnet, daß die Hülse (7) einen weiteren Dichtring (9) aufnimmt, der mit Abstand von dem anderen Dichtring (8) angeordnet ist und zwischen der Hülse (7) und dem Eisenrohr (2, 35) angeordnet ist, daß das Eisenrohr (2) einen Anschlag trägt, mit dem mindestens ein Einzelteil der Verschraubung zusammenwirkt, und daß im Kunststoffrohr (1) eine metallische Hülse am Ort des Dichtringes (8) angeordnet ist, die einen Bund oder eine am Ort des Dichtringes (8) angeordnete ringförmige Ausnehmung (14), ringförmige Rillen oder ringförmige Erhebungen aufweist.

2. Gas-Hausanschlußvorrichtung nach Anspruch 1, dadurch gekennzeichnet, daß die Hülse (7) im Inneren zwischen dem dem Eisenrohr (2) zugeordneten Dichtring (9) und der Schraubhülse (11) mit Außengewinde einen weiteren Distanzring (12) aufweist und daß vorzugsweise die Hülse (7) in einem Isolierstoffrohrstück (5) untergebracht ist.

3. Gas-Hausanschlußvorrichtung nach Anspruch 1, mit einem Eisenrohr, das eine Kunststoffummantelung trägt, dadurch gekennzeichnet, daß der Anschlag durch eine in der Kunststoffummantelung eingearbeitete Rille (13) gebildet ist.

4. Gas-Hausanschlußvorrichtung nach Anspruch 1, dadurch gekennzeichnet, daß der Anschlag durch einen am Ende des Eisenrohres (2) angebrachten Ring oder Flansch (18) gebildet ist.

5. Gas-Hausanschlußvorrichtung nach Anspruch 1, dadurch gekennzeichnet, daß der Anschlag durch einen Bund oder Flansch (18) eines in das Ende des Eisenrohres eingeschraubten Nippels (19) gebildet ist.

6. Gas-Hausanschlußvorrichtung nach Anspruch 1, dadurch gekennzeichnet, daß die metallische Hülse vom freien Ende des Eisenrohres (2) gebildet ist.

7. Gas-Hausanschlußvorrichtung nach Anspruch 1, dadurch gekennzeichnet, daß die metallische Hülse von einem rohrförmigen Ansatz (15) an einem in das Eisenrohr eingeschraubten Nippel (19) gebildet ist.

8. Gas-Hausanschlußvorrichtung nach Anspruch 1, dadurch gekennzeichnet, daß die metallische Hülse (17) einen Flansch als Anschlag trägt.

9. Gas-Hausanschlußvorrichtung nach Anspruch 1, dadurch gekennzeichnet, daß die Hülse (7) am einen Ende ein Innengewinde aufweist, in das eine Schraubhülse (11) mit Außengewinde eingeschraubt ist,

daß die Hülse (7) am anderen Ende als Anschlag oder Lager für den Dichtring (8) ausgebildet ist und daß zwischen den Dichtringen (8, 9) ein Distanzring (10) angeordnet ist.

10. Gas-Hausanschlußvorrichtung nach Anspruch 1, dadurch gekennzeichnet, daß die Hülse (7) auf dem mit Innengewinde versehenen Ende eine Feuerschutzkappe (20) trägt und daß vorzugsweise die Feuerschutzkappe (20) einen Isolierring (22) trägt und Löcher für das Durchstecken von Schrauben (21) aufweist.

11. Gas-Hausanschlußvorrichtung nach Anspruch 1, dadurch gekennzeichnet, daß die Verschraubung aus einer mit mindestens einem Außengewinde versehenen Hülse und mindestens einer Überwurfmutter besteht.

12. Gas-Hausanschlußvorrichtung nach Anspruch 1, dadurch gekennzeichnet, daß im Eisenrohr (2) am Ort des Dichtringes (9) eine ringförmige Ausnehmung (25), ringförmige Rillen oder ringförmige Erhebungen angeordnet sind.

13. Gas-Hausanschlußvorrichtung nach Anspruch 1 und 12, dadurch gekennzeichnet, daß die Dichtringe (8, 9) rechteckigen oder trapezförmigen Querschnitt aufweisen.

14. Gas-Hausanschlußvorrichtung nach Anspruch 13, dadurch gekennzeichnet, daß im Querschnitt des Dichtringes die parallel zur Achse verlaufende Seite länger als die senkrecht zur Achse verlaufende Seite ist.

15. Gas-Hausanschlußvorrichtung nach Anspruch 1 und 12 bis 14, dadurch gekennzeichnet, daß der dem Eisenrohr (2) zugeordnete Dichtring (9) einen Innendurchmesser aufweist, der dem Außendurchmesser des Eisenrohres (2) im Bereich der den Dichtring (9) aufnehmenden Rille (25) entspricht, während der Innendurchmesser des dem Kunststoffrohr (1) zugeordneten Dichtringes (8) dem Außendurchmesser des Kunststoffrohres (1) entspricht, während die Außendurchmesser der beiden Dichtringe (8, 9) dem Innendurchmesser der Hülse (7) entsprechen.

16. Gas-Hausanschlußvorrichtung nach Anspruch 1, dadurch gekennzeichnet, daß das Eisenrohr (2) vor seinem Ende eine ringförmige Nut aufweist, in die ein Sicherungsring (27) (Seegerring) eingesetzt ist.

17. Gas-Hausanschlußvorrichtung nach Anspruch 16, dadurch gekennzeichnet, daß die Schraubhülse (11) auf dem Eisenrohr (2) durch einen am Ende des Eisenrohres in eine ringförmige Nut eingesetzten Sicherungsring (27) einerseits und einen auf dem Eisenrohr (2) befindlichen Bund (35) oder Absatz andererseits axial unverschiebbar, aber drehbar festgelegt ist.

18. Gas-Hausanschlußvorrichtung nach Anspruch 1, dadurch gekennzeichnet, daß der dem Eisenrohr (2) zugeordnete Dichtring (9) schmaler und aus etwas härterem Gummi als der dem Kunststoffgasrohr (1) zugeordnete Dichtring (8) ist.

## Claims

1. A gas house connection device, by means of which a synthetic resin pipe (1) embedded in the ground is to be connected to an iron pipe (2) which is installed in the house, consting of a screw joint, in which a sealing ring (8) is squeezed in a sleeve (7) and is thereby brought into contact with the synthetic resin pipe (1) and the inner wall of the sleeve (7), characterised in that the sleeve (7) accommodates a further sealing ring (9) which is spaced from the other sealing ring (8) and is arranged between the sleeve (7) and the iron pipe (2, 35);
that the iron pipe (2) carries a stop, with which at least one individual component of the screw joint co-operates;
and that, in the synthetic resin pipe (1), a metal sleeve is arranged at the location of the sealing ring (8), which sleeve has a flange, or has an annular recess (14), annular grooves, or annular projections, at the location of the sealing ring (8).

2. A gas house connection device according to claim 1, characterised in
that between the sealing ring (9) assigned to the iron pipe (2) and the externally-threaded screw sleeve (11), the sleeve (7) has within it a further spacing ring (12);
and that the sleeve (7) is preferably accommodated in a length of pipe (5) of insulating material.

3. A gas house connection device according to claim 1, having an iron pipe which carries a synthetic resin casing, characterised in that the stop is formed by a groove (13) which is worked in the synthetic resin casing.

4. A gas house connection device according to claim 1, characterised in that the stop is formed by a ring or flange (18) located at the end of the iron pipe (2).

5. A gas house connection device according to claim 1, characterised in that the stop is formed by a collar or flange (18) of a nipple (19) which is screwed into the end of the iron pipe.

6. A gas house connection device according to claim 1, characterised in that the metal sleeve is formed by the free end of the iron pipe (2).

7. A gas house connection device according to claim 1, characterised in that the metal sleeve is formed by a tubular extension (15) on a nipple (19) which is screwed into the iron pipe.

8. A gas house connection device according to claim 1, characterised in that the metal sleeve (17) carries a flange as stop.

9. A gas house connection device according to claim 1, characterised in that, at one end, the sleeve (7) has an internal thread, into which an externally-threaded screw sleeve (11) is screwed; that, at the other end, the sleeve (7) is designed as a stop or a support for the sealing ring (8); and that a spacing ring (10) is arranged between the sealing rings (8, 9).

10. A gas house connection device according to claim 1, characterised in that the sleeve (7) carries a fire protection cap (20) at the internally-threaded end; and that the fire protection cap (20) preferably carries an insulating ring (22) and has openings for the insertion of screws (21).

11. A gas house connection device according to claim 1, characterised in that the screw joint consists of a sleeve, provided with at least one external thread, and at least one lock nut.

12. A gas house connection device according to claim 1, characterised in that an annular recess (25), annular grooves or annular projections are arranged in the iron pipe at the location of the sealing ring (9).

13. A gas house connection device according to claim 1 and 12, characterised in that the sealing rings (8, 9) have a rectangular or trapezoidal cross-section.

14. A gas house connection device according to claim 13, characterised in that, in the cross-section of the sealing ring, the side running parallel to the axis is longer than the side running at right angles to the axis.

15. A gas house connection device according to claim 1 and 12 to 14, characterised in that the sealing ring (9) allocated to the iron pipe (2) has an internal diameter which corresponds to the outer diameter of the iron pipe (2) in the region of the groove (25) which houses the sealing ring (9), whilst the internal diameter of the sealing ring (8) allocated to the synthetic resin pipe (1) corresponds to the outer diameter of the synthetic resin pipe (1), and whilst the outer diameter or the two sealing rings (8, 9) corresponds to the internal diameter of the sleeve (7).

16. A gas house connection device according to claim 1, characterised in that before its end, the iron pipe (2) has an annular groove into which as safety ring (27) (Seeger circlip ring) is inserted.

17. A gas house connection device according to claim 16, characterised in that the screw sleeve (11) is fixed on the iron pipe (2) so as to be axially immobile, but rotatable, by means of a safety ring (27), which is inserted into an annular groove at the end of the iron pipe, on the one hand, and by a collar (35) or shoulder, arranged on the iron pipe (2), on the other hand.

18. A gas house connection device according to claim 1, characterised in that the sealing ring allocated to the iron pipe (2) is narrower and made of somewhat harder rubber than the sealing ring (8) which is allocated to the synthetic resin gas pipe (1).

## Revendications

1. Dispositif de raccordement domestique d'adduction de gaz, au moyen duquel un tube en matière plastique (1) installé dans le sol doit être relié à un tube en fer (2) installé dans la maison, et qui est constitué par une liaison vissée, dans laquelle une bague d'étanchéité (8) est serrée dans un manchon (7) et est appliquée de ce fait contre le tube en matière plastique (1) et contre la paroi intérieure du manchon (7), caractérisé par le fait que le manchon (7) loge une seconde bague d'étanchéité (9) qui est disposée à distance de l'autre bague d'étanchéité (8) et est placée entre le manchon (7) et le tube en fer (2, 35), que le tube en fer (2) comporte une butée qui coopère avec au moins une partie individuelle de la liaison vissée, et que dans le tube en matière plastique (1) se trouve disposé, au niveau de la bague d'étanchéité (8), un manchon métallique qui comporte un collet ou un évidement annulaire (14) disposé au niveau de la bague d'étanchéité (8), des rainures annulaires ou des élévations de forme annulaire.

2. Dispositif de raccordement domestique d'adduction de gaz selon la revendication 1, caractérisé en ce que le manchon (7) comporte intérieurement une bague suplémentaire formant entretoise (12) entre la bague d'étanchéité (9) associée au tube en fer (2) et le manchon fileté (11) muni d'un filetage extérieur, et que de préférence le manchon (7) est logé dans un élément de tube en matériau isolant (5).

3. Dispositif de raccordement domestique d'adduction de gaz selon la revendication 1, comportant un tube en fer qui porte une gaine en matière plastique, caractérisé en ce que la butée est constituée par une rainure (13) usinée dans la gaine en matière plastique.

4. Dispositif de raccordement domestique d'adduction de gaz selon la revendication 1, caractérisé en ce que la butée est formée par un anneau ou une bride (18) situé sur l'extrémité du tube en fer (2).

5. Dispositif de raccordement domestique d'adduction de gaz selon la revendication 1, caractérisé en ce que la butée est formée par un collet ou une bride (18) d'un raccord fileté (19) vissé dans l'extrémité du tube en fer.

6. Dispositif de raccordement domestique d'adduction de gaz selon la revendication 1, caractérisé en ce que le manchon métallique est formé par l'extrémité libre du tube en fer (2).

7. Dispositif de raccordement domestique d'adduction de gaz selon la revendication 1, caractérisé en ce que le manchon métallique est formé par un appendice saillant tubulaire (15) situé sur un raccord fileté (19) vissé dans le tube en fer.

8. Dispositif de raccordement domestique d'adduction de gaz selon la revendication 1, caractérisé en ce que le manchon métallique (17) comporte une bride servant de butée.

9. Dispositif de raccordement domestique d'adduction de gaz selon la revendication 1, caractérisé en ce que le manchon (7) comporte, sur une extrémité, un taraudage dans lequel est vissé un manchon fileté (11) muni d'un filetage extérieur, que le manchon (7) à l'autre extrémité est réalisé sous la forme d'une butée ou d'un support pour la bague d'étanchéité (8), et qu'une bague formant entretoise (10) est disposée entre les bagues d'étanchéité (8, 9).

10. Dispositif de raccordement domestique d'adduction de gaz selon la revendication 1, caractérisé en ce que le manchon (7) porte un capuchon pare-feu (20) sur son extrémité munie d'un taraudage et que de préférence le capuchon pare-feu (20) porte une bague isolante (22) et comporte des trous pour le passage de vis (21).

11. Dispositif de raccordement domestique d'adduction de gaz selon la revendication 1, caractérisé en ce que la liaison vissée est consituée par au moins un manchon portant un filetage extérieur et par au moins un écrou d'accouplement.

12. Dispositif de raccordement domestique d'adduction de gaz selon la revendication 1, caractérisé en ce qu'un évidement annulaire (25), des rainures annulaires ou des élévations annulaires sont disposés dans le tube en fer (2) au niveau de la bague d'étanchéité (9).

13. Dispositif de raccordement domestique d'adduction de gaz selon les revendications 1 et 12, caractérisé en ce que les bagues d'étanchéité (8, 9) possèdent une section transversale carrée ou trapézoïdale.

14. Dispositif de raccordement domestique d'adduction de gaz selon la revendication 13, caractérisé en ce que dans la section transversale de la bague d'étanchéité, le côté parallèle à l'axe est plus long que le côté perpendiculaire à l'axe.

15. Dispositif de raccordement domestique d'adduction de gaz selon les revendications 1 et 12 à 14, caractérisé en ce que la bague d'étanchéité (9) associée au tube en fer (2) possède un diamètre intérieur qui correspond au diamètre extérieur du tube en fer (2) dans la région de la rainure (25) logeant la bague d'étanchéité (9), tandis que le diamètre intérieur de la bague d'étanchéité (8) associée au tube en matière plastique (1) correspond au diamètre extérieur du tube en matière plastique (1), et que les diamètres extérieurs des deux bagues d'étanchéité (8, 9) correspondent au diamètre intérieur du manchon (7).

16. Dispositif de raccordement domestique d'adduction de gaz selon la revendication 1, caractérisé en ce que le tube en fer (2) comporte, en-deçà de son extrémité, une gorge annulaire dans laquelle est insérée une bague de sécurité (27) (anneau de retenue).

17. Dispositif de raccordement domestique d'adduction de gaz selon la revendication 16, caractérisé en ce que le manchon fileté (11) est fixé d'une manière fixe axialement, avec possibilité de rotation, d'une part sur le tube en fer (2) au moyen d'une bague de sécurité (27) insérée dans une gorge annulaire dans l'extrémité du tube en fer, et d'autre part au moyen d'un collet (35) ou un épaulement situé sur le tube en fer (2).

18. Dispositif de raccordement domestique d'adduction de gaz selon la revendication 1, caractérisé en ce que la bague d'étanchéité (9) associée au tube en fer (2) est plus étroite et est constituée en un caoutchouc légèrement plus dur que la bague d'étanchéité (8) associée au tube en matière plastique (1).

FIG.1

0 042 885

FIG. 2

0 042 885

FIG. 3

0 042 885

FIG.4

FIG.5

FIG. 6

0 042 885